(19) Europäisches Patentamt European Patent Office Office européen des brevets

(11) **EP 3 487 917 B1**

(12) **FASCICULE DE BREVET EUROPEEN**

(45) Date de publication et mention de la délivrance du brevet:
**15.07.2020 Bulletin 2020/29**

(21) Numéro de dépôt: **17748558.8**

(22) Date de dépôt: **25.07.2017**

(51) Int Cl.:
*C08J 9/36* (2006.01)  *C08J 9/40* (2006.01)
*C08K 3/12* (2006.01)  *C08L 75/04* (2006.01)
*C01B 6/00* (2006.01)

(86) Numéro de dépôt international:
**PCT/FR2017/052073**

(87) Numéro de publication internationale:
**WO 2018/020146 (01.02.2018 Gazette 2018/05)**

(54) **KIT DE REDUCTION, COMPOSITION REDUCTRICE ET LEUR UTILISATION**

REDUKTIONSKIT, REDUZIERENDE ZUSAMMENSETZUNG UND VERWENDUNG DIESES KITS UND DIESER ZUSAMMENSETZUNG

REDUCTION KIT, REDUCING COMPOSITION AND USE OF SAID KIT AND COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2016 FR 1657090**

(43) Date de publication de la demande:
**29.05.2019 Bulletin 2019/22**

(73) Titulaires:
• **CENTRE NATIONAL DE LA RECHERCHE SCIENTIFIQUE**
**75016 Paris (FR)**
• **Université Claude Bernard Lyon 1**
**69100 Villeurbanne (FR)**
• **Université de Strasbourg**
**67000 Strasbourg (FR)**

(72) Inventeurs:
• **EDOUARD, David**
**01120 Dagneux (FR)**
• **LEFEBVRE, Louis**
**13006 Marseille (FR)**
• **JIERRY, Loïc**
**67000 Strasbourg (FR)**
• **RITLENG, Vincent**
**67300 Schiltigheim (FR)**
• **KELBER, Julien**
**67400 Illkirch Graffenstaden (FR)**

(74) Mandataire: **Lavoix**
**2, place d'Estienne d'Orves**
**75441 Paris Cedex 09 (FR)**

(56) Documents cités:
**WO-A2-2016/012689**

• **DATABASE WPI Week 201479 Thomson Scientific, London, GB; AN 2014-V38325 XP002768702, -& CN 104 018 141 A (HARBIN INST TECHNOLOGY) 3 septembre 2014 (2014-09-03)**

**Description**

**Domaine de l'invention**

La présente invention concerne un nouveau kit de réduction, une nouvelle composition de réduction et leur utilisation en tant que réactif d'une réaction de réduction.

**Contexte de l'invention**

De nombreux procédés industriels mettent en œuvre des réactions de réduction utilisant des composés réducteurs comme composé réactif. Typiquement, ces réactions sont la réduction des cétones ou aldéhydes en alcools, des imines, des hydrazones, des thioesters, des chlorures d'acyle, la purification des eaux usées comprenant des métaux toxiques, des composés organiques ou des colorants, la réduction d'oxydes soufrés tels que le dioxyde de soufre $SO_2$ pour la production de dithionite de sodium qui est un agent blanchissant. La production de dithionite de sodium est l'utilisation principale de $NaBH_4$ dans l'industrie. La production de nanoparticules, tels que les nanoparticules d'or est également réalisée à partir d'agents réducteurs (hydrures). L'utilisation d'hydrures, comme « support de stockage » d'hydrogène, fait également l'objet de recherche intense pour les acteurs du milieu industriel. Pour réaliser ces réactions de réduction, une importante quantité de composés réducteurs, tels que LiH, NaH, $NaBH_4$, $LiAlH_4$ ou DIBAL-H est nécessaire. Par exemple, la production annuelle de colorants à traiter excède les 700 000 tonnes.

Non seulement la quantité nécessaire de composés réducteurs est importante mais ils sont utilisés en très large excès dans les procédés industriels car les conditions d'utilisation partiellement aqueuses les dégradent. Il est également nécessaire de mettre en œuvre des étapes de séparation sophistiquées pour séparer les composés réducteurs réduits des produits valorisables obtenus par la réaction de réduction. D'autre part, ces hydrures sont généralement préparés en solution, ce qui diminue les risques liés au stockage prolongé de grandes quantités de ces réactifs (plus stables en solution que sous forme solide). L'utilisation actuelle des composés réducteurs n'est donc pas satisfaisante car elle pose des problèmes de coûts, de sécurité et des problèmes environnementaux. Dans le contexte écologique et économique actuel, le développement de nouveaux composés réducteurs, plus propres, plus sélectifs, moins dangereux, et moins coûteux est devenu un enjeu sociétal majeur.

Pour résoudre ces problèmes, des compositions réductrices comprenant un composé réducteur supporté ont, par exemple, été développées. Ainsi des compositions réductrices comprenant du $NaBH_4$ supporté sur alumine (Réf : 243620 ALDRICH) ou supporté sur polymère (Réf: 359947 ALDRICH) sont commercialisées et) et également un composé réducteur comprenant du $NaBH_4$ et des nano particules (240 nm) de polydopamine a été étudié (S.Du et al. - Catalysis Communication, 2015 (DOI : 10.0116/jcatcom2015.09.020)). Cependant ces compositions réductrices sont délicates à conserver et chères à produire car elles font appel à des procédés de fabrication peu écologiques (préparation des supports, modification de surface en solvants organiques, utilisation de hautes températures pour compléter les processus de physisorption). En outre, les supports se présentent sous la forme de poudre, de particules ou de billes de faible diamètre qui sont fragiles et se brisent facilement lors de l'utilisation de barreaux magnétiques par exemple dans des réacteurs de faible volume (< 1 L). Leur utilisation dans des réacteurs plus grands est également proscrite car ces supports décantent facilement et sont difficiles à disperser en solution dans un grand volume réactionnel, en particulier en utilisant les systèmes d'agitation industriels (agitation mécanique de faible vitesse de rotation). De plus, la séparation de ces compositions réductrices des produits valorisables obtenus par la réduction nécessite des étapes de séparation sophistiquées (notamment pour les nano/microparticules ou les poudres) et est couteuse. L'utilisation de ces hydrures supportés est également difficile à mettre en œuvre dans des systèmes fluidiques à cause de la perte de charge importante due au faible diamètre des particules supports. Pour ces raisons, ils ne peuvent être utilisés à l'échelle industrielle.

De façon surprenante, la Demanderesse a trouvé un kit de réduction qui permet de lever les inconvénients mentionnés ci-dessous. Ce kit de réduction comprend d'une part un composé réducteur et d'autre part une mousse polymère à cellules ouvertes comprenant en surface un polymère à motif catéchol. Ce kit de réduction présente des propriétés réductrices supérieures aux propriétés réductrices du composé réducteur et de la mousse polymère à cellules ouvertes comprenant en surface un polymère à motif catéchol utilisés séparément. Il permet également de réduire de manière significative la quantité de composé réducteur utilisé lors d'une réaction de réduction. De plus, le kit de réduction selon l'invention est séparé facilement des produits valorisables obtenus par réaction de réduction sans mettre en œuvre d'étape de filtration ultérieure. Le kit de réduction permet donc de réduire significativement les coûts et l'impact environnemental des réactions de réduction qui sont très répandues dans l'industrie. D'autre part, la mousse polymère peut présenter des propriétés élastomères qui facilitent son adaptation à tous types de réacteurs.

Ainsi l'invention a pour objet un kit de réduction selon la revendication 1.

L'invention a également pour objet une composition réductrice selon la revendication 9.

Selon un autre aspect, l'invention a pour objet un procédé de synthèse d'une composition réductrice selon la revendication 10.

L'invention a aussi pour objet l'utilisation du kit de réduction selon la revendication 11.

## Description détaillée de l'invention

<u>Kit de réduction</u>

La présente invention concerne un kit de réduction comprenant :

- d'une part un composé réducteur, et
- d'autre part une mousse polymère à cellules ouvertes comprenant en surface un polymère à motif catéchol.

Au sens de la présente demande, "composé réducteur" désigne un composé chimique qui cède au moins un électron à un autre composé chimique lors d'une réaction d'oxydoréduction. Un composé réducteur selon l'invention n'est pas un catalyseur.

Au sens de la présente demande, "mousse polymère à cellules ouvertes" est une dispersion solide obtenue par polymérisation dans laquelle une grande quantité de gaz est dispersée formant ainsi des cellules ouvertes ou porosité ouverte, ainsi un gaz ou un liquide peut traverser la mousse polymère à cellules ouvertes de part en part. La mousse polymère à cellules ouvertes mise en œuvre dans le kit selon l'invention peut comprendre des cellules fermées. Contrairement à une membrane, définie par l'*International Union of Pure and Applied Chemistry* (IUPAC) comme une structure dont les dimensions latérales (longueur et largeur) sont très largement supérieures à son épaisseur, la mousse polymère à cellules ouvertes mise en œuvre dans le kit de réduction selon l'invention est une structure dont les dimensions latérales sont du même ordre de grandeur que son épaisseur.

Au sens de la présente demande, "polymère à motif catéchol" désigne un polymère obtenu par polymérisation d'un composé comportant un motif catéchol (1,2-dihydroxybenzène) éventuellement substitué.

Dans la suite de la demande, une mousse polymère à cellules ouvertes comprenant en surface un polymère à motif catéchol pourra être désignée par l'expression "mousse comprenant en surface un polymère".

Le composé réducteur est un hydrure choisi parmi $LiBH_4$, $NaBH_4$, $KBH_4$, $NaBH_3CN$, $LiH$, $NaH$, $KH$, $CaH_2$, $BH_3$, $LiAlH_4$, $AlH_3$, $GaH_3$, $InH_3$, $TlH_3$, un hydrure de dialkylaluminiun, tel que le diisobutylaluminium (DIBAL), leur dérivé et leur mélange. De préférence le composé réducteur est $NaBH_4$.

Typiquement, dans le kit de réduction selon l'invention, le composé réducteur peut être solide, liquide, gazeux. Il peut être dissous dans un solvant organique ou aqueux.

Selon un mode de réalisation préféré, dans le kit de réduction selon l'invention, le composé réducteur est compris dans une solution réductrice, la concentration en composé réducteur dans la solution réductrice pouvant être typiquement de 0,001 mol/l à 14,7 mol/l, de préférence 0,001 mol/l à 1 mol/l, et plus préférentiellement encore de 0,01 mol/l à 0,5 mol/l.

Selon un mode de réalisation, la mousse comprenant en surface un polymère est choisie parmi une mousse de polypropylène expansé comprenant en surface un polymère à motif catéchol, une mousse de polystyrène comprenant en surface un polymère à motif catéchol, une mousse de polyuréthane comprenant en surface un polymère à motif catéchol, une mousse en polydiméthylsiloxane (PDMS) comprenant en surface un polymère à motif catéchol, une mousse en PVC (polychlorure de vinyle) comprenant en surface un polymère à motif catéchol et leur mélange, de préférence une mousse de polyuréthane comprenant en surface un polymère à motif catéchol.

De façon avantageuse, la mousse de polyuréthane peut être préparée en fort tonnage et à faible coût par des procédés bien connus de l'homme du métier, typiquement par réaction de polymérisation entre un isocyanate et un alcool. La mousse de polyuréthane utilisée est souple et robuste aux sollicitations mécaniques. De plus, la réticulation du polyuréthane permet l'utilisation de ces supports dans certains solvants organiques. Les mousses de polyuréthane sont très légères, à la différence de bien d'autres supports pour la catalyse, ce qui rend leur manipulation, transport et leur utilisation très aisés. Les mousses en polyuréthane sont également d'excellents isolants phoniques et thermiques. Enfin, le caractère biocompatible de ce matériau permet l'utilisation de ces mousses dans des environnements biologiques.

Typiquement, le diamètre équivalent moyen de l'ouverture des cellules, appelé aussi taille des "fenêtres", ou taille des "pores" de la mousse comprenant en surface un polymère peut être de 50 $\mu$m à 5000 $\mu$m, en particulier de 100 $\mu$m à 4000 $\mu$m, plus particulièrement encore de 200 $\mu$m à 3000 $\mu$m.

Le diamètre équivalent moyen de l'ouverture des cellules de la mousse comprenant en surface un polymère peut être déterminé par microscope optique, électronique ou tomographie.

Typiquement, la porosité hydrodynamique (c.à.d. le ratio du volume directement accessible par un fluide gaz ou liquide (qui traverserait la mousse de part en part) par rapport au volume total de la mousse à cellules ouvertes) peut être de 0,5 à 0,99, en particulier de 0,7 à 0,99, plus particulièrement encore de 0,8 à 0,98.

La porosité hydrodynamique de la mousse comprenant en surface un polymère peut être déterminée par un porosimètre ou par la méthode de déplacement de fluides ou encore par des mesures de perméabilités.

Typiquement le composé comportant un motif catéchol permettant l'obtention du polymère à motif catéchol par polymérisation est choisi parmi les catécholamines ou les polyphénols tels que l'acide caféique, le catéchol, la catéchine et ses stéréoisomères, l'épigallocatéchine, l'épigallocatéchine gallate, l'hydroxyhydroquinone, la morine (2',3,4',5,7-pentahydroxyflavone), le pyrogallol, l'acide tannique, et leur mélange.

Selon un mode de réalisation préféré, le composé comportant un motif catéchol est choisi parmi les catécholamines, c'est-à-dire parmi les composés comprenant un motif catéchol dont le groupement benzène comprend une chaine latérale d'alkylamine éventuellement substituée. L'adrénaline, la 3,4-dihydroxyphényl-L-alanine, la dopamine (4-(2-aminoéthyl)benzène-1,2-diol) ou un dérivé de celle-ci, l'adrénaline, la noradrénaline, la L-DOPA, l'éphédrine, la noréphédrine, l'épinéphrine, et leur mélange sont des catécholamines qui conviennent pour la présente invention.

Selon un mode de réalisation préféré, la catécholamine est la dopamine, un dérivé de celle-ci ou leur mélange.

Selon un mode de réalisation particulièrement préféré, le polymère à motif catéchol est la polydopamine.

De façon avantageuse, la polydopamine est non toxique, respectueuse de l'environnement, présente des propriétés réductrices (antioxydantes).

Selon un mode de réalisation particulièrement préféré du kit de réduction selon l'invention, le composé réducteur est $NaBH_4$, la mousse comprenant en surface un polymère est une mousse de polyuréthane comprenant en surface de la polydopamine.

Le kit de réduction selon l'invention présente des propriétés réductrices, principalement conférées par le composé réducteur, même si le polymère à motif catéchol peut aussi présenter des propriétés réductrices.

Compte tenu de ces propriétés réductrices, le kit de réduction selon l'invention peut être utilisé en tant que réactif d'une réaction de réduction.

Au cours de la réaction de réduction, le composé réducteur et la mousse comprenant en surface un polymère sont utilisés conjointement. En fonction du procédé utilisé, ils peuvent être mis en contact simultanément ou séquentiellement avec le composé à réduire.

De façon avantageuse, les propriétés réductrices du kit de réduction selon l'invention sont supérieures aux propriétés réductrices du composé réducteur et de la mousse comprenant en surface un polymère utilisés séparément. Grâce à cette augmentation des propriétés réductrices, le kit de réduction selon l'invention permet à la fois d'accélérer les processus de réduction mais aussi de fortement réduire la quantité de composé réducteur nécessaire à une réaction de réduction, et donc la quantité de produit secondaire résiduelle (réducteur oxydé, sels de bore dans le cas de l'utilisation de $NaBH_4$ comme composé réducteur).

Au cours de la réaction de réduction, les cellules de la mousse comprenant en surface un polymère sont autant de mini-réacteurs favorisant un mélange intime des réactifs au sein de ladite mousse comprenant en surface un polymère. La mousse comprenant en surface un polymère du kit de réduction selon l'invention favorise ainsi les réactions de réduction en conditions douces de température et de pression.

La mousse comprenant en surface un polymère présente une porosité hydrodynamique importante et ouverte. Le passage des réactifs, gazeux ou liquides, d'une réaction de réduction, à travers la mousse comprenant en surface un polymère est donc possible et favorisé même à faible pression.

Lorsque la mousse comprenant en surface un polymère est utilisée dans un procédé continu, la perte de charge est avantageusement limitée grâce aux propriétés morphologiques de ladite mousse comprenant en surface un polymère (taille des cellules (ou pores), et porosité hydrodynamique (ou ouverte))
Grâce à la réticulation des chaines polymères qui la constituent, la mousse présente un caractère élastique.

Le caractère élastique de la mousse est conservé lorsqu'elle comprend un polymère en surface (Chem. Commun. 2016, 52, 4691).

De façon avantageuse, cette élasticité permet d'adapter la mousse comprenant en surface un polymère du kit de réduction selon l'invention à tous types de réacteurs, même des réacteurs non conventionnels. Sa résistance aux sollicitations mécaniques permet également de faciliter son transport et son stockage.

L'association de la résistance mécanique et chimique et de l'élasticité permet à la mousse comprenant en surface un polymère de ne pas se détériorer au cours des réactions de réduction. La mousse comprenant en surface un polymère du kit de réduction selon l'invention peut donc être utilisée plusieurs fois sans se dégrader.

Lorsque le polymère à motif catéchol est la polydopamine, alors, et sans vouloir être lié par aucune théorie, les inventeurs sont d'avis que lorsque le kit de réduction est utilisé en tant que réactif d'une réaction de réduction, les propriétés réductrices de la polydopamine stabilisent le composé réducteur présent dans le kit de réduction selon l'invention et/ou joue le rôle de médiateur rédox pour la réaction de réduction. La quantité de composé réducteur nécessaire à la réaction de réduction est, par conséquent et avantageusement, fortement réduite.

Grâce à ces propriétés, et aux avantages en découlant, la mousse comprenant en surface un polymère du kit de réduction selon l'invention est adaptée à une utilisation à l'échelle industrielle, en particulier lorsqu'elle comprend en surface de la polydopamine.

Comme décrit précédemment, le composé réducteur et la mousse comprenant en surface un polymère du kit de réduction selon l'invention sont utilisés conjointement au cours de la réaction de réduction. Au cours de cette utilisation conjointe la mousse comprenant en surface un polymère est peut être partiellement fonctionnalisée par le composé réducteur.

De façon avantageuse, la fonctionnalisation de la mousse comprenant en surface un polymère permet de séparer facilement les produits obtenus lors de la réaction de réduction.

Composition réductrice

L'invention porte également sur une composition réductrice comprenant :

- un composé réducteur,
- une mousse polymère à cellules ouvertes comprenant en surface un polymère à motif catéchol,

caractérisée en que la mousse polymère à cellules ouvertes comprenant en surface un polymère à motif catéchol est partiellement ou totalement fonctionnalisée par le composé réducteur.

Selon un mode de réalisation préféré, la mousse polymère à cellules ouvertes comprenant en surface un polymère à motif catéchol est fonctionnalisée par le composé réducteur.

La mousse polymère à cellules ouvertes comprenant en surface un polymère à motif catéchol, le composé réducteur et les modes de réalisations associés sont tels que décrits ci-dessus dans la partie en lien avec le kit de réduction selon l'invention.

Sans vouloir être lié par aucune théorie, les inventeurs sont d'avis que la fonctionnalisation de la mousse polymère à cellules ouvertes comprenant à sa surface le polymère à motif catéchol par le composé réducteur est obtenue par l'un ou plusieurs des phénomènes chimiques suivants :

- l'adsorption du composé réducteur par la mousse polymère à cellules ouvertes comprenant à sa surface le polymère à motif catéchol,
- la réaction du composé réducteur en surface de la mousse polymère à cellules ouvertes comprenant à sa surface le polymère à motif catéchol conduisant à la formation d'une ou plusieurs liaisons covalentes entre les groupements hydroxyles du motif catéchol et le composé réducteur, et
- lorsque le polymère à motif catéchol présent en surface de la mousse polymère à cellules ouvertes est obtenu par polymérisation d'une catécholamine, la présence de groupements amines chargés positivement (ammoniums) peut permettre la complexation électrostatique avec le composé réducteur chargé négativement (ion borohydrure, $BH_4^-$).

Au sens de la présente demande, une composition réductrice dans laquelle "la mousse polymère à cellules ouvertes comprenant en surface un polymère à motif catéchol est partiellement fonctionnalisée par le composé réducteur" est une composition réductrice dans laquelle :

- une partie du composé réducteur fonctionnalise la mousse polymère à cellules ouvertes comprenant en surface un polymère à motif catéchol,
- l'autre partie du composé réducteur est libre.

Au sens de la présente demande, une composition réductrice dans laquelle "la mousse polymère à cellules ouvertes comprenant en surface un polymère à motif catéchol est totalement fonctionnalisée par le composé réducteur" est une composition réductrice dans laquelle l'ensemble du composé réducteur fonctionnalise la mousse polymère à cellules ouvertes comprenant en surface un polymère à motif catéchol.

La composition réductrice selon l'invention présente des propriétés réductrices, principalement conférées par le composé réducteur, même si le polymère à motif catéchol peut aussi présenter des propriétés réductrices.

Compte tenu de ces propriétés réductrices, la composition réductrice selon l'invention peut être utilisée en tant que réactif d'une réaction de réduction.

Les propriétés réductrices de la composition réductrice selon l'invention sont supérieures aux propriétés réductrices du composé réducteur et de la mousse comprenant en surface un polymère utilisés séparément.

La fonctionnalisation de la mousse comprenant en surface un polymère permet de stabiliser le composé réducteur. La stabilisation évite la dégradation du composé réducteur dans les conditions partiellement aqueuses d'une réaction de réduction. La stabilisation permet également d'utiliser de façon répétée la composition réductrice selon l'invention sans avoir à refonctionnaliser la mousse comprenant en surface un polymère par le composé réducteur après chaque utilisation de ladite composition réductrice selon l'invention. Elle permet en outre de stocker la mousse modifiée dans le temps et de l'utiliser ultérieurement sans perte d'activités.

Grâce à ses propriétés réductrices supérieures et à la fonctionnalisation, la quantité de composé réducteur nécessaire à une réaction de réduction est fortement diminuée lors de l'utilisation de la composition réductrice dans une réaction de réduction.

Selon un mode de réalisation, la composition réductrice selon l'invention comprend de 10 mg/kg à 5000 mg/kg, en particulier de 1000 mg/kg à 2500 mg/kg, plus particulièrement encore de 1500 mg/kg à 1700 mg/kg de composé réducteur par rapport à la masse totale de ladite composition réductrice.

Cette quantité est très inférieure à la quantité utilisée dans les procédés industriels classiques de réduction où le composé réducteur est utilisé en excès.

La quantité de composé réducteur dans la composition réductrice selon l'invention peut être déterminée par des techniques classiques de caractérisations des matériaux tels que la spectrométrie à plasma à couplage inductif (ICP-AES), ou par mesure de la différence de masses entre la mousse avant et après traitement avec le composé réducteur.

La quantité de composé réducteur dans la composition réductrice selon l'invention dépend des conditions mises en œuvre dans le procédé de synthèse de ladite composition réductrice décrit ci-dessous.

La fonctionnalisation de la mousse comprenant en surface un polymère par le composé réducteur est favorisée par le motif catéchol du polymère à motif catéchol. De façon avantageuse, les catécholamines décrites précédemment favorisent donc la fonctionnalisation de la mousse comprenant en surface un polymère par le composé réducteur.

En particulier, lorsque le polymère à motif catéchol est la polydopamine, alors, et sans vouloir être lié par aucune théorie, les inventeurs sont d'avis que, les propriétés réductrices de la polydopamine ont un effet stabilisateur supplémentaire sur le composé réducteur. Cette stabilisation supplémentaire favorise l'utilisation répétée de la composition réductrice selon l'invention et la réduction de la quantité de composé réducteur nécessaire à une réaction de réduction.

Plus particulièrement encore, lorsque le polymère à motif catéchol est la polydopamine et le composé réducteur est $NaBH_4$, les inventeurs sont d'avis que la fonctionnalisation de la mousse comprenant en surface un polymère par $NaBH_4$ est obtenue par la formation de complexes de bores, typiquement des catécholboranes, à la surface de ladite mousse comprenant en surface un polymère. De façon avantageuse, la formation de ces complexes et les propriétés réductrices de la polydopamine permettent de stabiliser et d'éviter la dégradation de $NaBH_4$ en milieu aqueux et, par conséquent, de réduire fortement la quantité de $NaBH_4$ nécessaire à une réaction de réduction.

De par ses propriétés physico-chimiques, la composition réductrice selon l'invention favorise les réactions de réduction en conditions douces de température et de pression, limite la perte de charge en cas de flux importants, est légère et flexible et donc adaptable à tous types de réacteurs, est résistante aux sollicitations mécaniques et chimiques, est utilisable de façon répétée, réduit fortement la quantité de composé réducteur nécessaire aux réactions de réduction et favorise la séparation des produits obtenus par une réaction de réduction.

La composition réductrice selon l'invention est donc adaptée à une utilisation à l'échelle industrielle.

Procédé de synthèse de la composition réductrice selon l'invention

La présente invention a également pour objet un procédé de synthèse de la composition réductrice selon l'invention comprenant une étape de mise en contact d'une mousse polymère à cellules ouvertes comprenant en surface un polymère à motif catéchol et d'une solution aqueuse comprenant un composé réducteur, caractérisée en ce que : le pH de la solution aqueuse au début de l'étape de mise en contact, est ajusté à au moins 7, en particulier de 7 à 14, plus particulièrement de 8 à 12, et plus particulièrement encore entre 9 et 11.

La mousse polymère à cellules ouvertes comprenant en surface le polymère à motif catéchol et le composé réducteur sont tels que définis ci-dessus.

La quantité de composé réducteur dans la composition réductrice selon l'invention dépend du pH de la solution aqueuse comprenant le composé réducteur au début de l'étape de mise en contact. Pour des valeurs de pH en dessous de 7 la quantité de composé réducteur est faible et peut fortement être augmentée lorsque ce pH en début de l'étape de mise en contact est supérieur à 7. Typiquement, pour un hydrure de bore, lorsque le pH de la solution aqueuse au début de l'étape de mise en contact est ajusté à une valeur acide, alors la composition obtenue par le procédé selon l'invention comprend moins de 2,5 mg/kg de bore par rapport à la masse totale de ladite composition réductrice. Typiquement, lorsque le pH de la solution aqueuse au début de l'étape de mise en contact est ajusté à une valeur d'au moins 7, la composition réductrice selon l'invention comprend de 2,5 mg/kg à 5000 mg/kg, en particulier de 1000 mg/kg à 2500 mg/kg, plus particulièrement encore de 1500 mg/kg à 1700 mg/kg de bore par rapport à la masse totale de ladite composition réductrice.

Les propriétés réductrices de la composition réductrice selon l'invention dépendent du pH de la solution aqueuse comprenant le composé réducteur au début de l'étape de mise en contact. Typiquement, lorsque le pH de la solution aqueuse au début de l'étape de mise en contact est ajusté à une valeur acide alors la composition obtenue selon le procédé de l'invention présente des propriétés de réduction qui ne sont pas suffisantes pour une exploitation industrielle.

Typiquement, lorsque le pH de la solution aqueuse au début de l'étape de mise en contact est ajusté à une valeur d'au moins 7 alors la composition réductrice selon l'invention présente des propriétés réductrices suffisantes pour une exploitation industrielle. Les propriétés réductrices de la composition réductrice selon l'invention augmentent lorsque le pH de la solution aqueuse au début de l'étape de mise en contact est ajusté basique et sont maximales lorsque le pH est compris entre 9 et 11.

Typiquement, la mousse comprenant en surface un polymère peut être obtenue selon le procédé décrit dans la demande WO 2016/012689 et dans l'article scientifique Chem. Commun. 2016, 52, 4691 ou selon le procédé décrit dans l'article scientifique Ponzio et al - Chemistry of Materials, 2016 (DOI: 10.1021/acs.chemmater.6b01587).

Typiquement l'étape de mise en contact peut être réalisée en introduisant la mousse comprenant en surface un polymère dans la solution aqueuse comprenant le composé réducteur, ou en imprégnant la mousse comprenant en surface un polymère par la solution aqueuse comprenant le composé réducteur.

La concentration en composé réducteur de la solution aqueuse dépend de la masse et des dimensions de mousse comprenant en surface un polymère. Typiquement la concentration en composé réducteur de la solution aqueuse peut être de 0,001 mol/l à 14,7 mol/l, de préférence 0,05 mol/l à 1 mol/l, et plus préférentiellement encore de 0,01 mol/l à 0,5 mol/l.

De façon avantageuse, le procédé de synthèse selon l'invention met en œuvre des solutions aqueuses comprenant de faibles concentrations en composé réducteur. Il convient de préciser que les solutions de réducteur sont fraîchement préparées. Dans le cas de l'utilisation de $NaBH_4$ comme agent réducteur, contrairement aux procédures généralement décrites, l'utilisation de solution de soude concentrée pour dissoudre le $NaBH_4$ n'est pas nécessaire.

Typiquement le procédé de synthèse selon l'invention peut être mis en œuvre à température ambiante. Le procédé de synthèse selon l'invention n'est donc pas énergivore.

Bien que la durée de l'étape de la mise en contact dépende de nombreux paramètres tels que les dimensions, la taille des cellules , la porosité, la densité de mousse comprenant en surface un polymère ou de la concentration en composé réducteur de la solution aqueuse, une durée d'au moins 1 minute, en particulier de 2 minutes à 600 minutes, plus particulièrement de 10 minutes à 60 minutes, est suffisant pour obtenir la composition réductrice selon l'invention.

Le procédé de synthèse selon l'invention met en œuvre des solutions aqueuses comprenant de faibles concentrations en composé réducteur. De plus, il peut être mis en œuvre à température ambiante, il n'est donc pas énergivore. De façon avantageuse, le procédé de synthèse selon l'invention est respectueux de l'environnement.

La composition réductrice obtenue par le procédé de synthèse selon l'invention présente des propriétés réductrices. La composition réductrice obtenue par le procédé de synthèse selon l'invention peut être utilisée en tant que réactif d'une réaction de réduction.

Selon un mode de réalisation, le kit de réduction selon l'invention, la composition réductrice selon l'invention ou obtenue par le procédé de synthèse selon l'invention peuvent être utilisés en tant que réactif dans une réaction de réduction.

A titre d'exemples de réaction de réduction, on peut citer :

- la réduction de colorants ou de pigments, tels que le bleu de méthylène, l'éosine, l'indigo ;
- la réduction d'insecticides, pesticides ou herbicides, tels que le paraquat, le diquat, le difenzoquat, le paraoxon ;
- la réduction d'un aldéhyde tel que le benzaldéhyde, le cinnamaldéhyde ;
- la réduction de cétones en alcools, d'imines, d'hydrazones, de thioesters, de chlorures d'acyle ;
- la réduction d'oxydes de soufre, tels que le dioxyde de soufre pour la production de dithionite de sodium ;
- la réduction d'un précurseur métallique pour la formation de particule métallique, le précurseur métallique pouvant être choisi parmi un sel ou complexe d'Ag, Au, Ce, Co, Fe, Ir, Ni, Pd, Pt, Rh, Ru, Sn, W, Zn et leur mélange.

Le kit de réduction selon l'invention, la composition réductrice selon l'invention ou obtenue par le procédé de synthèse selon l'invention peuvent être utilisés pour la purification des eaux usées comprenant des métaux toxiques, des composés organiques et/ou des colorants.

Le kit de réduction selon l'invention, la composition réductrice selon l'invention ou obtenue par le procédé de synthèse selon l'invention peuvent être utilisés pour le stockage et/ou la production d'hydrogène.

L'invention va être décrite plus en détail à l'aide des exemples suivants donnés à titre d'illustration seulement et des Figures annexées.

**Description des Figures**

La Figure 1 présente deux clichés de Microscopie Electronique à Balayage (MEB). A gauche, une mousse de polyuréthane, à droite, une mousse de polyuréthane comprenant en surface de la polydopamine (voir Exemple 1).

La Figure 2 représente un graphique illustrant l'évolution du taux de réduction du Bleu de Methylène (BM) par six échantillons différents (A-F ; cf. exemple 3) en fonction du temps.

La Figure 3 représente un graphique illustrant l'utilisation répétée du kit de réduction selon l'invention pour la réduction de BM.

La Figure 4 représente un graphique illustrant l'utilisation répétée de la composition réductrice selon l'invention pour la réduction de BM.

La Figure 5 représente un graphique illustrant l'évolution du taux réduction du BM par la composition réductrice selon l'invention (A) et deux produits commerciaux (G et H).

La Figure 6 présente un cliché de MEB d'une composition réductrice selon l'invention comprenant en surface des nanoparticules d'argent.

La Figure 7 représente un graphique illustrant la masse totale de BM réduit par des compositions réductrices selon l'invention, qui ont été synthétisées avec des solutions aqueuses de $NaBH_4$ de pH différents (5, 7, 10 et 12).

La Figure 8 présente l'évolution au cours du temps du rapport r = *Aire (alcool benzylique)/[Aire (alcool benzylique) + Aire (benzaldehyde)]* mesuré par HPLC couplée à un spectrophotomètre UV-visible.

**Exemples**

**Exemple 1 : Synthèse d'une mousse de polyuréthane comprenant en surface de la polydopamine.**

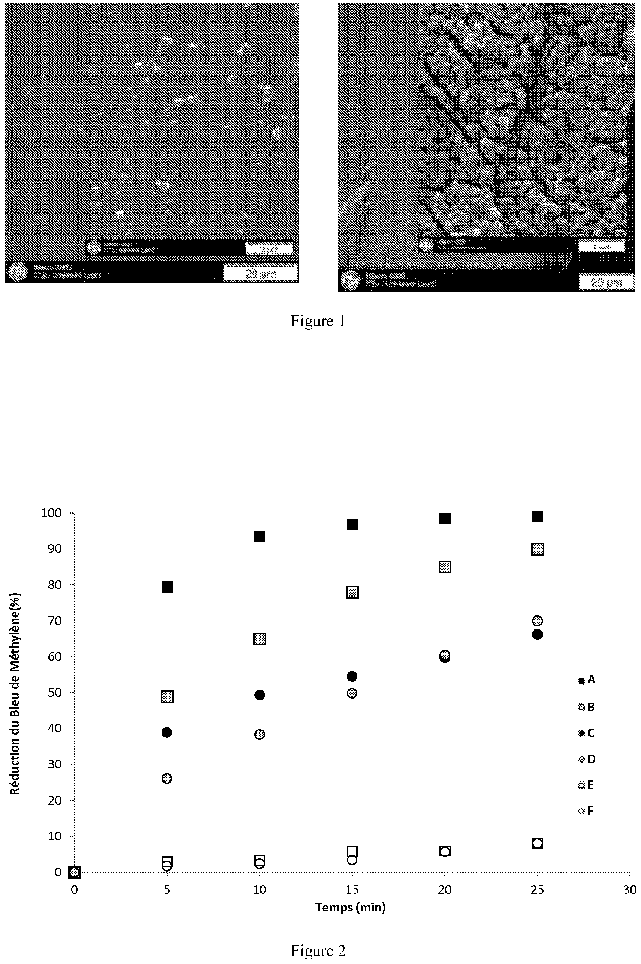

La mousse de polyuréthane est un échantillon de mousse *Regicell@ 20* (Foampartner®) de 8 cm³ et d'environ 200 mg.
Une solution aqueuse de chlorhydrate de dopamine est préparée par dissolution de chlorhydrate de dopamine (2 mg/ml) dans une solution aqueuse (60 ml) de tris(hydroxyméthyl)-aminométhane (TRIS) à une concentration molaire de 10 mM dont le pH est ajusté à 8,5 par addition au goutte à goutte d'une solution aqueuse de HCl à 1 M.
La mousse de polyuréthane est immergée, à température ambiante pendant 24 heures, dans la solution aqueuse agitée de dopamine, dans une pièce éclairée. La polymérisation de dopamine en polydopamine est caractérisée par le changement de la couleur de la solution aqueuse en brun foncé. La mousse de polyuréthane comprenant en surface de la polydopamine est ensuite rincée avec de l'eau ultrapure (MiliQ).
Des analyses de la surface de la mousse obtenue par spectroscopie de photoélectrons aux rayons X (XPS) et les images de MEB (*Cf.* Figure 1) confirment la présence d'un revêtement uniforme de polydopamine à la surface de la mousse de polyuréthane. La masse de polydopamine à la surface de la mousse de poyluréthane est d'environ 2 mg.
La mousse obtenue dans cet exemple est donc une mousse de polyuréthane comprenant en surface de la polydopamine.

**Exemple 2 :_Synthèse de la composition réductrice dans laquelle le composé réducteur est $NaBH_4$.**

La mousse de polyuréthane comprenant en surface de la polydopamine de l'Exemple 1 est immergée, à température ambiante et pendant 10 minutes, dans une solution aqueuse agitée de 150 ml comprenant, 0,1 mol/l de $NaBH_4$ et dont le pH est de 10.. La fonctionnalisation de la mousse de polyuréthane comprenant en surface de la polydopamine est caractérisée par l'apparition d'une légère coloration jaune de la solution aqueuse et une faible production de $H_2(g)$.
La quantité de bore provenant de $NaBH_4$ dans la composition réductrice est mesurée par ICP-AES. Cette quantité est d'environ 1600 mg/kg de composition réductrice.
La composition réductrice obtenue dans cet exemple comprend donc une mousse en polyuréthane comprenant en surface de la polydopamine fonctionnalisée par du $NaBH_4$.

**Exemple 3 : Evaluation des propriétés réductrices du kit de réduction et de la composition réductrice selon l'invention lors de la réduction du Bleu de Méthylène (BM).**

Les propriétés de réduction de six échantillons différents mais de masse voisines (c.à.d. 200±20 mg) ont été évaluées lors de la réduction du BM.
Liste des échantillons testés :

- A : Composition réductrice selon l'invention de l'Exemple 2,
- B : Kit de réduction selon l'invention comprenant la mousse de l'Exemple 1 + solution aqueuse de $NaBH_4$ (15 ml, 0,1 mol/l de $NaBH_4$)
- C : Mousse de polyuréthane avec $NaBH_4$ adsorbé en surface
- D : Mousse de polyuréthane + solution aqueuse de $NaBH_4$ (15 ml, 0,1 mol/l de $NaB_{H4}$)
- E : Mousse de l'Exemple 1
- F : Mousse de polyuréthane

Six solutions de BM de 50 ml sont préparées. La concentration en BM dans ces solutions est $2.10^{-5}$ mol/l de BM.

Un des six échantillons est immergé dans une des six solutions de BM agitée (avec un agi700 tours/min) de BM (50ml,) à température ambiante. Pour les échantillons B, et D la solution aqueuse de $NaBH_4$ est ajoutée en même temps que la mousse de l'Exemple 1 ou de polyuréthane. Pour les échantillons A, C, E et F aucune solution de $NaBH_4$ n'est ajoutée.

La variation de la concentration de BM dans la solution de BM est suivie pendant 25 minutes. Toutes les 5 minutes un prélèvement de la solution de BM est effectué. Le prélèvement est ensuite analysé par spectrophotométrie à la longueur d'onde de 664 nm, qui est la longueur d'onde d'absorption maximale du BM (spectrophotomètre UV-Vis Varian 50 Probe).

Le taux de réduction (%) de BM est calculé selon la formule suivante :

$$R(\%) = 100 * (1 - C_{BM}(t)/C_{BM}(0))$$

avec R le taux de réduction de BM, $C_{BM}(0)$ la concentration initiale de BM dans la solution de BM, et $C_{BM}(t)$ la concentration de BM à l'instant t dans la solution de BM.

L'évolution dans le temps de la réduction du BM est représenté sur la Figure 2.

Comme le montre le graphique de la Figure 2, au bout de 25 minutes :

- l'échantillon A (composition réductrice selon l'invention) a réduit 99% de BM dont 80% après 5 min
- l'échantillon B (kit de réduction selon l'invention) a réduit 90% de BM, dont 50% après 5 min
- les échantillons C et D ont réduit entre 65% et 70% de BM, dont respectivement 40% et 25% après 5 min
- les échantillons E et F ont réduit moins de 10% de BM dont 2% après 5 min

Dans le cas de l'échantillon A, plus de 90% de BM sont réduits après seulement 10 minutes.

La mousse de polyuréthane et la mousse de l'Exemple 1 ne dégradent que très peu BM. La réduction de BM par les échantillons C et D résulte donc du $NaBH_4$ adsorbé et de la solution aqueuse de $NaBH_4$, respectivement.

Comme illustré par la Figure 2 et les évolutions des taux de réduction de BM par les échantillons A et B, la combinaison de la mousse de polyuréthane comprenant en surface de la polydopamine et du $NaBH_4$ confère à la composition réductrice de l'invention (échantillon A) et au kit de réduction de l'invention (échantillon B) des propriétés réductrices supérieures aux propriétés réductrices de la mousse de l'Exemple 1 seule, de la mousse de polyuréthane seule ou en combinaison avec la solution aqueuse de $NaBH_4$ ou le $NaBH_4$ adsorbé en surface.

**Exemple 4 : Evaluation de l'utilisation répétée du kit de réduction selon l'invention lors de la réduction du Bleu de Méthylène (BM).**

L'utilisation répétée du kit de réduction selon l'invention a été évaluée. Le kit de réduction testé est l'échantillon B de l'Exemple 3.

Le protocole suivi est le suivant :

- cinq solutions de BM (50 ml et $2.10^{-5}$ mol/l de BM), numérotées de 1 à 5, sont préparées,
- cinq solutions aqueuses de $NaBH_4$ (15 ml, 0,1 mol/l de $NaBH_4$), numérotées de 1 à 5, sont préparées fraichement avant chaque utilisation,
- la mousse de l'Exemple 1 est immergée dans la solution de BM_1 sous agitation et la solution aqueuse de $NaBH_4$_1 est ajoutée simultanément,
- le taux de réduction de BM dans la solution BM_1 est suivi selon le protocole de l'Exemple 3 pendant 25 minutes,
- après les 25 minutes, la mousse de l'Exemple 1 est émergée de la solution de BM_1 puis immergée dans la solution de BM_2 et la solution aqueuse de $NaBH_4$_2 est ajoutée simultanément. Le taux de réduction de BM dans la solution de BM_2 est suivi selon le protocole de l'Exemple 3 pendant 25 minutes,
- etc... jusqu'à la solution de BM_5.

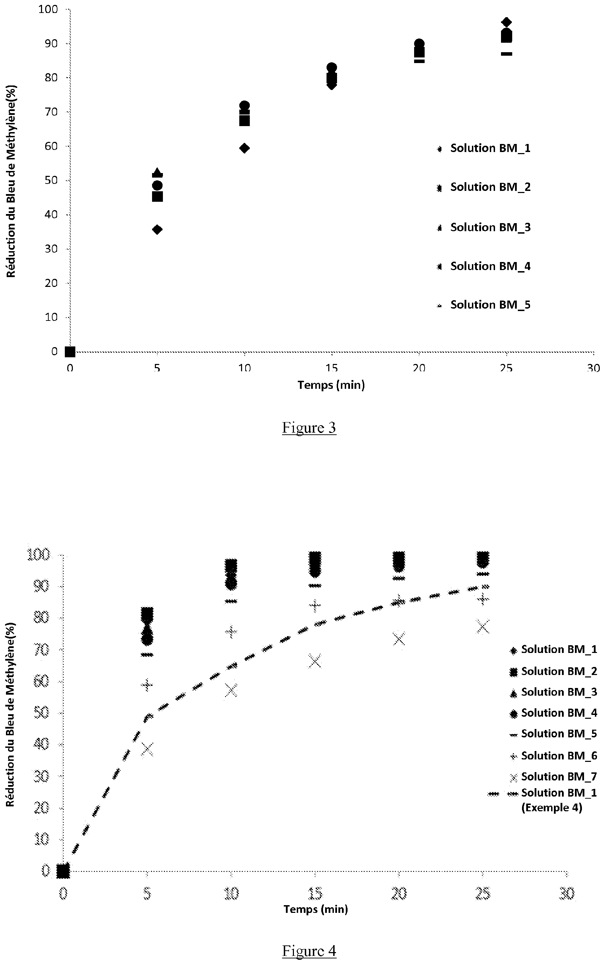

L'évolution dans le temps du taux de réduction du BM pour les solutions de BM_1 à 5 est représenté sur la Figure 3.

Comme illustré sur la Figure 3, l'évolution dans le temps du taux de réduction du BM est semblable pour les solutions de BM_1 à 5.

La morphologie de la mousse de l'Exemple 1 n'a pas été altérée par ces immersions répétées. Le kit de réduction selon l'invention peut donc être utilisé de façon répétée (au moins 5 fois).

Avec les échantillons C et D de l'exemple 3, une unique immersion est efficace en terme de réduction du bleu de méthylène. Contrairement au kit de réduction selon l'invention, les échantillons C et D de l'exemple 3 ne peuvent donc pas être utilisés de façon répétée.

**Exemple 5 : Evaluation de l'utilisation répétée d'une unique composition réductrice selon l'invention de l'Exemple 2 lors de la réduction du Bleu de Méthylène (BM)**

L'utilisation répétée de la composition réductrice selon l'invention a été évaluée. La composition réductrice testée est celle de l'Exemple 2.

Le protocole suivi est semblable de l'Exemple 4. Les différences sont les suivantes :

- sept solutions de BM (50 ml et $2.10^{-5}$ mol/l de BM), numérotées de 1 à 7, sont préparées, et
- aucune solution aqueuse de $NaBH_4$ n'est préparée et ajoutée aux solutions de BM_1 à 7.

L'évolution dans le temps du taux de réduction du BM pour les solutions de BM_1 à 7 est représenté sur la Figure 4. L'évolution dans le temps du taux de réduction du BM dans la solution de BM_1 par le kit de réduction selon l'invention (*Cf.* Exemple 4) est également représentée.

Comme illustré sur la Figure 4, l'évolution dans le temps du taux de réduction du BM est similaire dans les solutions de BM_1 à 5 et ce taux de réduction de BM est supérieur à celui obtenu par le kit de réduction selon l'invention dans la solution de BM_1.

Dans la solution de BM_6, la cinétique de réduction du BM est un peu ralentie et le taux de réduction est moins important que celui obtenu par la composition réductrice selon l'invention dans les solutions de BM_1 à 5. Cependant lors des 15 premières minutes ce taux de réduction est supérieur à celui obtenu par le kit de réduction selon l'invention dans la solution de BM_1, puis est du même ordre de grandeur.

Dans la solution de BM_7, la cinétique de réduction de BM est ralentie mais, après 25 minutes, le taux de réduction est d'environ 80% sans qu'un plateau n'ait été atteint, ce qui laisse supposer que pour un temps plus long, un taux de réduction plus élevé pourrait être obtenu.

De plus, la morphologie de la composition réductrice de l'Exemple 2 n'a pas été altérée par ces immersions répétées.

Cet exemple met en évidence que la composition réductrice selon l'invention peut être utilisée de façon répétée sans ajouter de $NaBH_4$. Avec les échantillons C et D de l'exemple 3, une seule est unique immersion permet la réduction du bleu de méthylène. Contrairement au kit de réduction selon l'invention, les échantillons C et D de l'exemple 3 ne peuvent donc pas être utilisés de façon répétée.

De façon avantageuse, cela permet de réduire fortement la quantité de $NaBH_4$ utilisée pour réduire le Bleu de Méthylène.

**Exemple 6 : Comparaison des propriétés réductrices de la composition réductrice selon l'invention de l'Exemple 2 avec des produits commerciaux lors de la réduction du Bleu de Méthylène (BM).**

Les propriétés de réduction de trois échantillons différents ont été évaluées selon le protocole décrit à l'Exemple 3.

Liste des échantillons testés :

- A : Composition réductrice selon l'invention de l'Exemple 2,
- G : $NaBH_4$ supporté sur alumine (Réf : 243620 ALDRICH)
- H : $NaBH_4$ supporté sur billes en matériau polymère (Réf : 328642 ALDRICH)

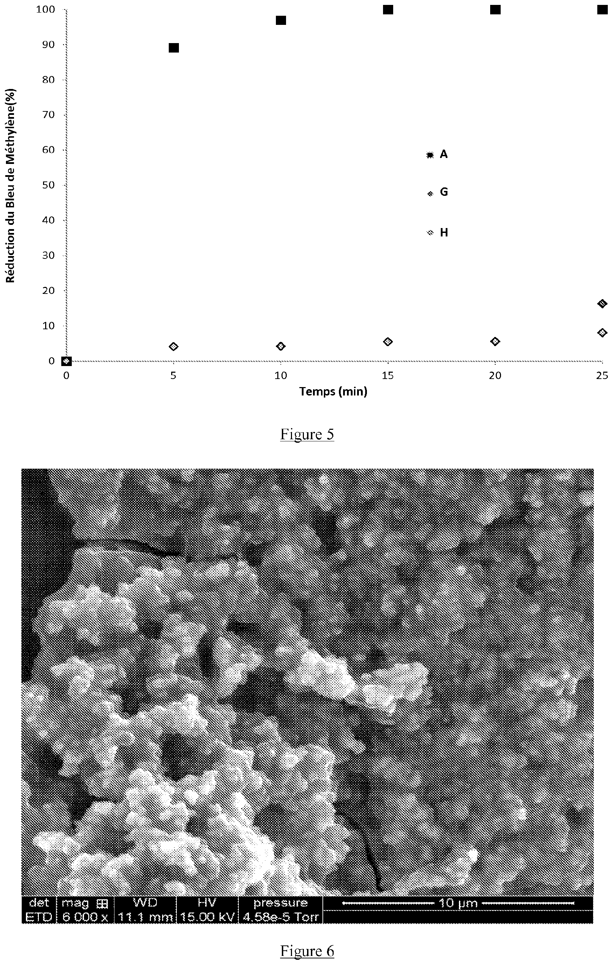

L'évolution dans le temps du taux de réduction de BM est représenté sur la Figure 5.

Comme le montre le graphique de la Figure 5, au bout de 25 minutes :

- l'échantillon A (composition réductrice selon l'invention) a réduit 99% de BM
- l'échantillon G a réduit moins de 20% de BM, et

-  l'échantillon H a réduit moins de 10% de BM.

Comme illustré par la Figure 5 et les évolutions des taux de réduction de BM par les trois échantillons, la combinaison de la mousse de polyuréthane comprenant en surface de la polydopamine fonctionnalisée par du $NaBH_4$ confère à la composition réductrice de l'invention des propriétés réductrices supérieures aux deux produits commerciaux testés.

**Exemple 7 : Evaluation des propriétés réductrices de la composition réductrice selon l'invention de l'Exemple 2 pour la synthèse de nanoparticules d'argent (NpAg).**

Les propriétés réductrices de la composition réductrice selon l'invention ont été étudiées lors de la synthèse de nanoparticules d'argent.

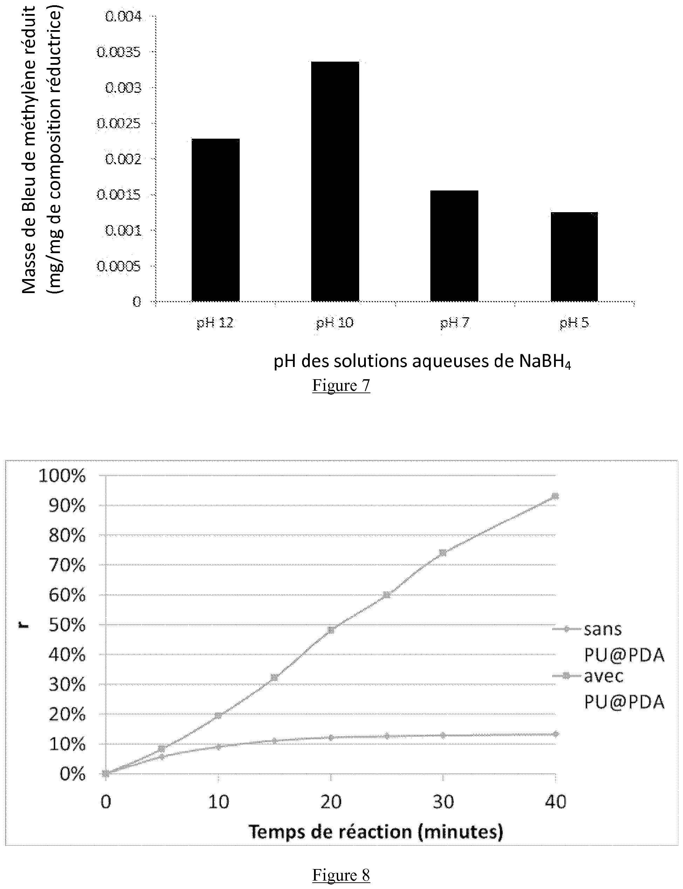

La composition réductrice de l'Exemple 2 a été immergée, sous agitation dans une solution aqueuse d'$AgNO_3$ à 50 mmol/l pendant 24h à température ambiante. La composition réductrice est ensuite retirée de la solution aqueuse d'$AgNO_3$ puis rincée avec de l'eau ultrapure (MiliQ). Le cliché de MEB de la Figure 7 confirme la présence de nanoparticules d'argent à la surface de la composition réductrice. Une analyse EDX (Energy Dispersive X-ray) de ce cliché de MEB ainsi que des mesures de masse permettent de déterminer que la masse d'argent à la surface de la composition réductrice est d'environ 17.5 mg.

La composition réductrice obtenue dans cet Exemple 7 comprend donc une mousse en polyuréthane comprenant en surface de la polydopamine fonctionnalisée par du $NaBH_4$ et des nanoparticules d'argent.

Lorsque la composition réductrice de l'Exemple 2 selon l'invention est utilisée pour la synthèse de nanoparticules d'argent, alors, et sans vouloir être lié par aucune théorie, les inventeurs sont d'avis que lorsque le composition réductrice est utilisée en tant que réducteur, les propriétés réductrices de la polydopamine réduisent les ions $Ag^+$, et stabilisent et protègent d'une oxydation les particules d'argent(0) présentes sur la surface de la dite composition réductrice.

**Exemple 8** : **Etude de l'effet du pH de la solution aqueuse de $NaBH_4$ sur la quantité de $NaBH_4$ dans la composition réductrice selon l'invention et les propriétés réductrices de la composition réductrice selon l'invention.**

a) Synthèse et caractérisation des compositions

Le protocole de synthèse est semblable à celui de l'Exemple 2, la différence étant que quatre solutions de $NaBH_4$ ont été préparées en ajustant leur pH à 5, 7 et 10.

Après la synthèse de quatre compositions réductrices selon l'invention, leur quantité de bore provenant de $NaBH_4$ est déterminée par ICP-AES.

Les résultats sont présentés dans le tableau suivant.

| Solution | Solution aqueuse pH 5 | Solution aqueuse pH 7 | Solution aqueuse pH 10 |
|---|---|---|---|
| Quantité de B dans la composition (mg/kg) | 1,6 | 2,1 | 1607 |

b) Etude des propriétés réductrices des compositions, réduction du Bleu de Méthylène

Les propriétés réductrices de ces compositions sont ensuite évaluées lors de la réduction du Bleu de Méthylène (BM). Le protocole suivi est celui de l'Exemple 3.

La masse totale de BM réduit est calculée à partir des taux de réduction de BM, et est représentée sur l'histogramme de la Figure 7.

Comme le montre l'histogramme de la Figure 7, la masse totale de BM réduit est limitée lorsque le pH de la solution aqueuse est 5, elle augmente lorsque le pH des solutions aqueuses est 7et 10, et elle est maximale lorsque le pH de la solution aqueuse est égal à 10.

Cet exemple met donc en évidence que les propriétés de réduction de la composition synthétisée avec la solution aqueuse de pH = 5 ne sont pas suffisantes pour une exploitation industrielle, alors que les propriétés de réduction des compositions réductrices selon l'invention synthétisées avec les solutions aqueuses de pH = 7 et 10 sont suffisantes pour une exploitation industrielle.

c) Etudes des propriétés réductrices des compositions réductrices synthétisées avec les solutions aqueuses de pH = 10 et pH=5, synthèse de nanoparticules d'argent (NpAg)

Les propriétés réductrices des compositions réductrices selon l'invention obtenues avec les solutions aqueuses de pH = 10 et de pH=5 sont ensuite évaluées pour la synthèse de nanoparticules d'argent (NpAg). Le protocole suivi est celui de l'Exemple 7.

La masse d'argent à la surface de la composition réductrice obtenue à partir de la solution de pH=10, mesurée comme décrit dans l'Exemple 7, est d'environ 17,5 mg. La masse d'argent à la surface de la composition réductrice obtenue à partir de la solution pH = 5 est d'environ 2,3 mg.

**Exemple 9** : **Evaluation des propriétés réductrices du kit de réduction de l'invention lors de la réaction de réduction du benzaldéhyde en alcool benzylique.**

La réduction du benzaldéhyde par le kit de réduction a été évaluée de la façon suivante. La mousse en polyuréthane recouverte de polydopamine utilisée est celle décrite dans l'Exemple 1 (volume de la mousse utilisée : 30 cm$^3$). La solution de NaBH$_4$ est fraichement préparée avant son utilisation. Une quantité de 114 mg de NaBH$_4$ est dissoute dans de l'eau ultra-pure (1.0 mL, sans utilisation de soude) puis cette solution réductrice est immédiatement ajoutée sur la mousse du kit de réduction en suspension dans une 1000 mL de solution méthanolique de benzaldéhyde. La concentration en benzaldéhyde est de 9.44 mM. Il convient de remarquer que la quantité de NaBH4 utilisée représente 0.32 équivalent molaire par rapport à la quantité de benzaldéhyde, soit 1,28 équivalent d'hydrures. La conversion du benzaldéhyde en alcool benzylique a lieu à température ambiante et a été suivie par chromatographie HPLC couplée à un spectrophotomètre UV-visible (Colonne SUPELCOSIL ABZ+PLUS 3$\mu$M 15CMx4.6MM HPLC (Sigma-Aldrich), éluant isocratique H$_2$O+0.1%TFA/acétonitrile 60/40, débit 1 mL/min., détection à 250 nm pour le benzaldéhyde et pour l'alcool benzylique). Le milieu réactionnel est prélevé puis analysé par HPLC toutes les 3 minutes: l'évolution de la proportion d'alcool benzylique formée ainsi que la diminution de la proportion de benzladéhyde de départ est suivi grâce aux temps de rétention caractéristiques du benzaldéhyde (t = 4.4 min) et de l'alcool benzylique (t = 3.1 min) dans les conditions d'analyse utilisées. Aucun autre pic n'est observé sur le chromatogramme. Sur la Figure 8 est représenté l'évolution au cours du temps du rapport d'aires r défini comme suivant:

$$r = Aire\ (alcool\ benzylique)/\ [Aire\ (alcool\ benzylique) + Aire\ (benzaldehyde)]$$

Deux courbes sont présentes sur la Figure 8 : une courbe présentant l'évolution de *r* en utilisant le kit de réduction et une courbe sans kit de réduction mais avec une quantité de NaBH$_4$ équivalente pour les deux cas. En l'absence de la mousse en polyuréthane recouverte de polydopamine, la réduction du benzaldéhyde en alcool benzylique par réaction directe du NaBH$_4$ est linéaire et très lente : au bout de 40 minutes, une conversion de 13% en alcool benzylique est mesurée. Lorsque le kit de réduction est utilisé, il conduit à une réaction de réduction rapide : au bout de 40 minutes, une conversion de 93% en alcool benzylique est mesurée.

**Exemple 10 : Evaluation des propriétés réductrices de la composition réductrice de l'invention de l'Exemple 2 lors de la réaction de réduction du benzaldéhyde.**

La composition réductrice a été préparée en utilisant une solution de 10 mL de 22% NaBH$_4$, 22% NaOH et 56% eau pure (rapport massique). La mousse en polyuréthane a été trempée dans cette solution pendant 1 minute sous agitation puis séchée par l'air comprimé. Cette mousse a été plongée dans une première solution A méthanolique de benzaldéhyde à 9,8 $\mu$M sous agitation et à température ambiante, puis de façon identique dans une seconde solution B méthanolique de benzaldéhyde à 9,8 $\mu$M. La conversion en alcool benzylique a été déterminée par HPLC comme décrit dans l'Exemple 9. Le rapport *r* est déterminé au bout de 10 minutes de réaction dans la solution A et B car au delà de cette durée, la conversion n'évolue plus. Elle est de 100% de conversion en alcool benzylique dans la solution A et de 70% dans la solution B.

**Revendications**

1.  Kit de réduction comprenant :

    - d'une part un composé réducteur, et
    - d'autre part une mousse polymère à cellules ouvertes et comprenant en surface un polymère à motif catéchol, **caractérisé en ce que** le composé réducteur est un hydrure choisi parmi LiBH$_4$, NaBH$_4$, KBH$_4$, NaBH$_3$CN, LiH, NaH, KH, CaH$_2$, BH$_3$, AlH$_3$, GaH$_3$, InH$_3$, TlH$_3$, un hydrure de dialkylaluminium leurs dérivés et leur mélange.

2. Kit de réduction selon la revendication 1, dans lequel le composé réducteur est l'hydrure de diisobutylaluminiun (DIBAL).

3. Kit de réduction selon la revendication 1, dans lequel le composé réducteur est le composé réducteur est NaBH$_4$.

4. Kit de réduction selon l'une quelconque des revendications 1 à 3, dans lequel le composé réducteur est solide, liquide ou gazeux.

5. Kit de réduction selon l'une quelconque des revendications 1 à 4, dans lequel le composé réducteur est compris dans une solution réductrice, la concentration en composé réducteur dans la solution réductrice étant de 0,001 mol/l à 14,7 mol/l, de préférence 0,05 mol/l à 1 mol/l, et plus préférentiellement encore de 0,01 mol/l à 0,5 mol/l.

6. Kit de réduction selon l'une quelconque des revendications 1 à 5, dans lequel la mousse polymère à cellules ouvertes comprenant en surface un polymère à motif catéchol est choisie parmi une mousse de polypropylène expansé comprenant en surface un polymère à motif catéchol, une mousse de polystyrène comprenant en surface un polymère à motif catéchol, une mousse de polyuréthane comprenant en surface un polymère à motif catéchol, une mousse en polydiméthylsiloxane (PDMS) comprenant en surface un polymère à motif catéchol, une mousse en PVC (poly chlorure de vinyle) comprenant en surface un polymère à motif catéchol et leur mélange, de préférence une mousse de polyuréthane comprenant en surface un polymère à motif catéchol.

7. Kit de réduction selon l'une quelconque des revendications 1 à 6, dans lequel le polymère à motif catéchol présent en surface de la mousse polymère à cellules ouvertes est obtenu par polymérisation d'un composé comprenant un motif catéchol choisi parmi les catécholamines ou les polyphénols tels que l'acide caféique, le catéchol, la catéchine et ses stéréoisomères, l'épigallocatéchine, l'épigallocatechine gallate, l'hydroxyhydroquinone, la morine (2',3,4',5,7-pentahydroxyflavone), le pyrogallol, l'acide tannique, et leur mélange.

8. Kit de réduction selon l'une quelconque des revendications 1 à 7, dans lequel le polymère à motif catéchol présent en surface de la mousse polymère à cellules ouvertes est la polydopamine.

9. Composition réductrice comprenant :

   - un composé réducteur tel que défini selon l'une quelconque des revendications 1 à 5,
   - une mousse polymère à cellules ouvertes comprenant en surface un polymère à motif catéchol telle que définie selon l'une quelconque des revendications 6 à 8,

   **caractérisée** en que la mousse polymère à cellules ouvertes comprenant en surface un polymère à motif catéchol est partiellement ou complètement fonctionnalisée par le composé réducteur.

10. Procédé de synthèse d'une composition réductrice telle que définie à la revendication 9 comprenant une étape de mise en contact de la mousse polymère à cellules ouvertes comprenant en surface le polymère à motif catéchol et d'une solution aqueuse comprenant le composé réducteur, **caractérisée en ce que** le pH de la solution aqueuse au début de l'étape de mise en contact, est ajusté à au moins 7, en particulier de 7 à 14, plus particulièrement de 8 à 12, et plus particulièrement encore entre 9 et 11.

11. Utilisation du kit de réduction tel que défini selon l'une quelconque des revendications 1 à 8, de la composition réductrice telle que définie à la revendication 9 ou obtenue selon le procédé de synthèse de la revendication 10, en tant que réactif d'une réaction de réduction.

**Patentansprüche**

1. Reduktionskit, umfassend:

   - einerseits eine reduzierende Verbindung und
   - andererseits einen Polymerschaum mit offenen Poren, der an der Oberfläche ein Polymer einer Brenzcatechol-Struktur umfasst, **dadurch gekennzeichnet, dass** die reduzierende Verbindung ein Hydrid ist, ausgewählt aus $LiBH_4$, $NaBH_4$, $KBH_4$, $NaBH_3CN$, LiH, NaH, KH, $CaH_2$, $BH_3$, $AlH_3$, $GaH_3$, $InH_3$, $TlH_3$, einem Dialkylaluminium-hydrid, ihren Nebenprodukten und ihren Mischungen.

2. Reduktionskit nach Anspruch 1, bei dem die reduzierende Verbindung Diisobutylaluminiumhydrid (DIBAL) ist.

3. Reduktionskit nach Anspruch 1, bei dem die reduzierende Verbindung $NaBH_4$ ist.

4. Reduktionskit nach einem beliebigen der Ansprüche 1 bis 3, bei dem die reduzierende Verbindung fest, flüssig oder gasförmig ist.

5. Reduktionskit nach einem beliebigen der Ansprüche 1 bis 4, bei dem die reduzierende Verbindung in einer Reduktionslösung enthalten ist, wobei die Konzentration der reduzierenden Verbindung in der Reduktionslösung von 0,001 mol/l bis 14,7 mol/l, vorzugsweise von 0,05 mol/l bis 1 mol/l und noch bevorzugter von 0,01 mol/l bis 0,5 mol/l gegeben ist.

6. Reduktionskit nach einem beliebigen der Ansprüche 1 bis 5, bei dem der Polymerschaum mit offenen Zellen, der an der Oberfläche ein Polymer mit Brenzcatechol-Struktur enthält, ausgewählt ist aus einem expandierten Polypropylenschaum, der an der Oberfläche ein Polymer mit Brenzcatechol-Struktur enthält, einem Polystyrenschaum, der an der Oberfläche ein Polymer mit Brenzcatechol-Struktur enthält, einem Polyurethanschaum, der an der Oberfläche ein Polymer mit Brenzcatechol-Struktur enthält, einem Polydimethylsiloxan(PDMS)-Schaum, der an der Oberfläche ein Polymer mit Brenzcatechol-Struktur enthält, einem PVC (Polyvenylchlorid)-Schaum, der an der Oberfläche ein Polymer mit Brenzcatechol-Struktur enthält, und ihren Mischungen, vorzugsweise einem Polyurethanschaum, der an der Oberfläche ein Polymer mit Brenzcatechol-Struktur enthält.

7. Reduktionskit nach einem beliebigen der Ansprüche 1 bis 6, bei dem das Polymer mit Brenzcatechol-Struktur, das an der Oberfläche des Polymerschaums mit offenen Poren vorhanden ist, durch Polymerisation einer Verbindung erhalten wird, die eine Brenzcatechol-Struktur enthält, ausgewählt aus Catecholaminen oder den Polyphenolen wie Kaffeesäure, dem Brenzcatechol, dem Catechin und seinen Stereoisomeren, dem Epigallocatechin, dem Epigallocatechingallat, dem Hydroxyhydroquinon, dem Morin (2',3,4',5,7-Pentahydroxyflavon), dem Pyrogallol, der Gerbsäure und ihren Mischungen.

8. Reduktionskit nach einem beliebigen der Ansprüche 1 bis 7, bei dem das Polymer mit Brenzcatechol-Struktur, das an der Oberfläche des Polymerschaums mit offenen Poren vorhanden ist, Polydopamin ist.

9. Reduktionszusammensetzung, enthalten:

- eine reduzierende Verbindung, wie sie nach einem beliebigen der Ansprüche 1 bis 5 definiert ist,
- ein Polymerschaum mit offenen Poren, der an der Oberfläche ein Polymer mit Brenzcatechol-Struktur, wie gemäß einem beliebigen der Ansprüche 6 bis 8 definiert, enthält,

**dadurch gekennzeichnet, dass** der Polymerschaum mit offenen Poren, der an der Oberfläche ein Polymer mit Brenzcatechol-Struktur enthält, teilweise oder vollständig von der reduzierenden Verbindung funktionalisiert ist.

10. Syntheseverfahren einer reduzierenden Zusammensetzung, wie im Anspruch 9 definiert, das einen Schritt des In-Kontakt-Bringens des Polymerschaums mit offenen Poren, der an der Oberfläche ein Polymer mit Brenzcatechol-Struktur enthält, und einer wässrigen Lösung, die die reduzierende Verbindung enthält, umfasst, **dadurch gekennzeichnet, dass** der pH-Wert der wässrigen Lösung zu Beginn des Schrittes des In-Kontakt-Bringens auf mindestens 7, besondere 7 bis 14, insbesondere 8 bis 12 und ferner insbesondere zwischen 9 und 11 eingestellt wird.

11. Verwendung des Reduktionskits, wie nach einem beliebigen der Ansprüche 1 bis 8 definiert, der reduzierenden Zusammensetzung, wie sie in Anspruch 9 definiert ist oder nach dem Syntheseverfahren des Anspruchs 10 erhalten wird, als Reaktionsmittel einer Reduktionsreaktion.

**Claims**

1. Reduction kit comprising:

- on the one hand, a reducing compound, and
- on the other hand an open cell polymer foam and comprising on the surface a catechol pattern polymer, wherein the reducing compound is a hydride selected from $LiBH_4$, $NaBH_4$, $KBH_4$, $NaBH_3CN$, LiH, NaH, KH, $CaH_2$, $BH_3$, $AlH_3$, $GaH_3$, $InH_3$, $TlH_3$, a dialkylaluminum hydride, their derivative and their mixture.

2. Reduction kit according to claim 1, wherein the reducing compound is diisobutylaluminum hydride (DIBAL),.

3. Reduction kit according to claim 1, wherein the reducing compound is $NaBH_4$.

4. Reduction kit according to any one of the claims 1 to 3, wherein the reducing compound is solid, liquid or gaseous.

5. Reduction kit according to any one of the claims 1 to 4, wherein the reducing compound is included in a reducing solution, the concentration of reducing compound in the reducing solution being from 0.001 mol/l to 14.7 mol/l, preferably 0.05 mol/l to 1 mol/l, and more preferably 0.01 mol/l to 0.5 mol/l.

6. Reduction kit according to any one of the claims 1 to 5, wherein the open cell polymer foam comprising on the surface a catechol pattern polymer is selected from an expanded polypropylene foam comprising on the surface a catechol pattern polymer, a polystyrene foam comprising on the surface a catechol-patterned polymer, a polyurethane foam comprising on the surface a catechol-patterned polymer, a polydimethylsiloxane (PDMS) foam comprising on the surface a catechol-patterned polymer, a PVC (polyvinyl chloride foam) comprising on the surface a catechol-patterned polymer and their mixture, preferably a polyurethane foam comprising on the surface a catechol-patterned polymer.

7. Reduction kit according to any one of the claims 1 to 6, wherein the catechol pattern polymer present on the surface of the open-cell polymer foam is obtained by polymerization of a compound comprising a catechol unit selected from catecholamines or polyphenols such as caffeic acid, catechol, catechin and its stereoisomers, epigallocatechin, epigallocatechin gallate, hydroxyhydroquinone, morine (2',3,4',5,7-pentahydroxyflavone), pyrogallol, tannic acid, and their mixture.

8. Reduction kit according to any one of the claims 1 to 7, wherein the catechol-patterned polymer present on the surface of the open-cell polymer foam is polydopamine.

9. Reducing composition comprising:

- a reducing compound as defined in claims 1 to 5,
- an open-cell polymer foam comprising on the surface a catechol-patterned polymer as defined in claims 6 to 8,

**characterized in that** the open-cell polymer foam comprising at the surface a catechol-patterned polymer is partially or fully functionalized by the reducing compound.

10. Method for synthesizing a reducing composition as defined in claim 9 comprising a step of contacting the open-cell polymer foam comprising the catechol-patterned polymer on the surface, and an aqueous solution comprising the reducing compound, **characterized in that** the pH of the aqueous solution at the beginning of the contacting step is adjusted to at least 7, in particular from 7 to 14, more preferably from 8 to 12, and even more preferably from 9 to 11.

11. Use of the reduction kit as defined in claims 1 to 8, the reducing composition as defined in claim 9 or obtained according to the synthesis method of claim 10, as a reagent of a reduction reaction.

Figure 1

Figure 2

Figure 3

Figure 4

Figure 5

Figure 6

Figure 7

Figure 8

**EP 3 487 917 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016012689 A

**Littérature non-brevet citée dans la description**

- **S.DU et al.** *Catalysis Communication,* 2015
- *Chem. Commun.,* 2016, vol. 52, 4691
- **PONZIO et al.** *Chemistry of Materials,* 2016